# EUROPÄISCHE PATENTSCHRIFT

(11) **EP 3 634 803 B1**
(45) Veröffentlichungstag und Bekanntmachung des Hinweises auf die Patenterteilung: **01.11.2023**
(21) Anmeldenummer: 18746595.0
(22) Anmeldetag: 09.07.2018
(51) Int. Cl.: B60L 1/00, B60L 50/50

(54) **ENERGIEVERSORGUNGSEINRICHTUNG FÜR EIN SCHIENENFAHRZEUG**
POWER SUPPLY FOR A RAIL VEHICLE
SOURCE DE PUISSANCE POUR UN VEHICULE FERROVIARE

(30) Priorität: 01.08.2017 DE 102017213306
(43) Veröffentlichungstag der Anmeldung: 15.04.2020
(73) Patentinhaber: Siemens Mobility GmbH, 81739 München (DE)
(72) Erfinder: KLIMA, Heinrich, 91056 Erlangen (DE)
(74) Vertreter: Siemens Patent Attorneys
(86) Internationale Anmeldenummer: PCT/EP2018/068492
(87) Internationale Veröffentlichungsnummer: WO 2019/025123

(56) Entgegenhaltungen:
- EP-A1- 2 599 656
- EP-A1- 2 875 982
- EP-A2- 2 141 044
- WO-A1-2014/206185
- WO-A1-2017/104256
- DE-A1-102009 008 549
- DE-A1-102012 208 241
- DE-A1-102012 216 312
- US-A1- 2014 012 446
- US-A1- 2015 061 377

## Beschreibung

Die Erfindung betrifft ein Schienenfahrzeug, nach Anspruch 1. Ferner betrifft die Erfindung ein Verfahren zum Betreiben eines solchen Schienenfahrzeugs (Anspruch 6).

Ein Bordnetz eines modernen Schienenfahrzeugs wird üblicherweise über einen Hilfsbetriebeumrichter mit elektrischer Energie versorgt. Eine Unterbrechung einer Energiezufuhr über eine Fahrleitung kann bei einem solchen Schienenfahrzeug dazu führen, dass dessen Hilfsbetriebeumrichter für die Dauer der Unterbrechung nicht mit elektrischer Energie versorgt wird, sodass der Hilfsbetriebeumrichter seinerseits das Bordnetz des Schienenfahrzeug nicht mit elektrischer Energie versorgen kann.

Um dieses Problem zu vermeiden, ist bei vielen modernen Schienenfahrzeugen vorgesehen, dass der Hilfsbetriebeumrichter eines Schienenfahrzeugs an die Traktionsausrüstung, genauer gesagt an einen Traktionszwischenkreis, des Schienenfahrzeugs gekoppelt ist. Dadurch soll erreicht werden, dass bei einer temporären Unterbrechung der Energiezufuhr über eine Fahrleitung der Hilfsbetriebeumrichter durch die Traktionsausrüstung mit elektrischer Energie versorgt wird. Mit anderen Worten, die Ankopplung des Hilfsbetriebeumrichters an die Traktionsausrüstung soll im Falle einer Unterbrechung einer Energiezufuhr über eine Fahrleitung eine Spannungsstützung des Hilfsbetriebeumrichters durch die Traktionsausrüstung ermöglichen. Ein Beispiel einer solchen Anordnung ist in der Patentveröffentlichung EP2599656 A1 (Mitsubishi Electric) offenbart.

Eine Aufgabe der Erfindung ist es, eine sichere Energieversorgung eines elektrischen Schienenfahrzeug-Bordnetzes zu ermöglichen.

Diese Aufgabe wird erfindungsgemäß gelöst durch ein Schienenfahrzeug nach Anspruch 1 sowie durch ein Verfahren nach Anspruch 6.

Vorteilhafte Weiterbildungen des erfindungsgemäßen Schienenfahrzeugs und des erfindungsgemäßen Verfahrens sind jeweils Gegenstand der weiteren Patentansprüche sowie der nachfolgenden Beschreibung.

Die Erfindung beruht auf der Erkenntnis, dass eine Spannungsstützung eines Hilfsbetriebeumrichters durch eine Traktionsausrüstung nur unter eher seltenen Randbedingungen funktioniert, nämlich nur dann, wenn sich das Schienenfahrzeug im Fahr- oder Bremsbetrieb befindet und das Schienenfahrzeug eine hinreichend große Fahrgeschwindigkeit hat. Insbesondere bei einem Schienenfahrzeug, welches im Nahverkehr eingesetzt wird, ist der Antrieb oft abgeschaltet (zum Beispiel beim Ausrollen des Schienenfahrzeugs oder wenn das Schienenfahrzeug steht) und folglich die Traktionsausrüstung nicht für eine Spannungsstützung eines Hilfsbetriebeumrichters nutzbar.

Die Energieversorgungseinrichtung des Schienenfahrzeugs weist ein elektrisches Bordnetz sowie eine mit dem Bordnetz verbundene Umrichtereinheit auf. Die Umrichtereinheit umfasst einen Umrichter zum Einspeisen elektrischer Energie in das Bordnetz sowie einen mit dem Umrichter verbundenen Zwischenkreis zum Versorgen des Umrichters mit elektrischer Energie. Des Weiteren umfasst die Energieversorgungseinrichtung eine mit dem Zwischenkreis verbundene unterbrechungsfreie Stromversorgung zum Einspeisen elektrischer Energie in den Zwischenkreis. Bei der Energieversorgungseinrichtung kann durch die unterbrechungsfreie Stromversorgung eine Spannungsstützung der Umrichtereinheit, genauer gesagt des Zwischenkreises, erfolgen. Anders ausgedrückt, die unterbrechungsfreie Stromversorgung kann dazu genutzt werden, die Umrichtereinheit, genauer gesagt deren Zwischenkreis, mit elektrischer Energie zu versorgen, beispielsweise falls eine Energieversorgung der Umrichtereinheit über eine Fahrleitung unterbrochen ist.

Die Spannungsstützung durch die unterbrechungsfreie Stromversorgung setzt nicht voraus, dass ein Schienenfahrzeug, in welchem die Energieversorgungseinrichtung angeordnet ist, sich im Fahr- oder Bremsbetrieb befindet oder eine hinreichend große Fahrgeschwindigkeit hat. Mit anderen Worten, die Spannungsstützung der Umrichtereinheit durch die unterbrechungsfreie Stromversorgung ist auch dann möglich, wenn das Schienenfahrzeug eine geringe Fahrgeschwindigkeit hat und/oder sich das Schienenfahrzeug nicht im Fahr- oder Bremsbetrieb befindet. Die unterbrechungsfreie Stromversorgung ermöglicht also unabhängig von einem Fahrbetriebszustand des Schienenfahrzeugs eine Spannungsstützung der Umrichtereinheit. Die Umrichtereinheit wiederum kann die ihr von der unterbrechungsfreien Stromversorgung bereitgestellte elektrische Energie zur Versorgung des Bordnetzes mit elektrischer Energie nutzen.

Im Sinne der vorliegenden Erfindung ist unter einem Umrichter eine Vorrichtung zu verstehen, welche dazu eingerichtet ist, elektrische Energie von einer Form in eine andere Form umzuwandeln, wobei die Umwandlung der Energieform eine Umwandlung der Stromart (Umwandlung von Gleichstrom zu Wechselstrom oder Umwandlung von Wechselstrom zu Gleichstrom), eine Spannungsänderung und/oder eine Frequenzänderung umfassen kann.

Das elektrische Bordnetz umfasst vorzugsweise ein oder mehrere Hilfsbetriebe. Unter einem Hilfsbetrieb ist vorliegend ein elektrisch betriebenes Nebenaggregat eines Fahrzeugs zu verstehen, also eine elektrisch betriebene Vorrichtung, welche nicht direkt eine Fortbewegung des Fahrzeugs bewirkt. Ein solcher Hilfsbetrieb kann zum Beispiel ein Elektromotor (insbesondere zum Antreiben einer Pumpe, eines Kompressors oder eines Lüfters), ein Heizwiderstand oder ein Batterieladegerät für eine Bordnetzbatterie sein. Die Umrichtereinheit der Energieversorgungseinrichtung bildet vorzugsweise einen Hilfsbetriebeumrichter bzw. eine Hilfsbetriebeumrichtereinheit.

Weiter umfasst das Bordnetz vorteilhafterweise eine oder mehrere Bordnetzleitungen, über welche der/die Hilfsbetrieb/- e mit dem Umrichter der Umrichtereinheit verbunden ist/sind.

Vorzugsweise ist der Umrichter als Wechselrichter, insbesondere als Pulswechselrichter, ausgebildet. Ferner ist der Zwischenkreis in bevorzugter Weise ein Gleichspannungszwischenkreis. In diesem Fall kann der Umrichter dazu genutzt werden, eine vom Zwischenkreis bereitgestellte Gleichspannung in eine Wechselspannung, insbesondere in eine Dreiphasenwechselspannung, für das Bordnetz umzuwandeln.

Der Zwischenkreis der Umrichtereinheit kann ein Kondensator sein oder mindesten einen Kondensator umfassen.

Vorteilhafterweise umfasst die unterbrechungsfreie Stromversorgung einen Energiespeicher zum Speichern elektrischer Energie. Elektrische Energie, die im Energiespeicher gespeichert ist, kann - insbesondere im Falle einer temporären Unterbrechung einer Energieversorgung des Zwischenkreises über eine Fahrleitung - in den Zwischenkreis der Umrichtereinheit eingespeist werden, um das Bordnetz mit elektrischer Energie versorgen zu können.

Weiter ist es vorteilhaft, wenn die unterbrechungsfreie Stromversorgung einen mit dem Energiespeicher verbundenen Gleichspannungswandler umfasst. In bevorzugter Weise ist der Gleichspannungswandler zwischen den Energiespeicher und den Zwischenkreis geschaltet. Mit anderen Worten, der Energiespeicher ist vorzugsweise über den Gleichspannungswandler mit dem Zwischenkreis der Umrichtereinheit verbunden.

Bei einer vorteilhaften Ausführungsform der Erfindung ist der Energiespeicher ein wiederaufladbarer Energiespeicher. Der Energiespeicher kann beispielsweise eine einzelne Sekundärzelle sein. Alternativ kann der Energiespeicher eine Zusammenschaltung mehrerer, insbesondere gleichartiger Sekundärzellen sein (auch Akkumulator genannt).

Zudem ist es vorteilhaft, wenn der Gleichspannungswandler als bidirektionaler Gleichspannungswandler ausgebildet ist. Auf diese Weise kann erreicht werden, dass der Energiespeicher über den Gleichspannungswandler mit elektrischer Energie aus dem Zwischenkreis der Umrichtereinheit aufladbar ist.

Des Weiteren ist es bevorzugt, wenn der Gleichspannungswandler dazu eingerichtet ist, eine vom Energiespeicher bereitgestellte Spannung auf eine höhere Spannung zu transformieren. Anders ausgedrückt, der Gleichspannungswandler ist vorzugsweise dazu eingerichtet, an seinen zwischenkreisseitigen Anschlüssen eine höhere Spannung bereitzustellen als vom Energiespeicher an den energiespeicherseitigen Anschlüssen des Gleichspannungswandlers bereitgestellt wird. Im Falle eines Energieflusses vom Energiespeicher zum Zwischenkreis der Umrichtereinheit kann der Gleichspannungswandler als Aufwärtswandler (auch Hochsetzsteller genannt) fungieren. Im Falle eines umgekehrten Energieflusses (also eines Energieflusses vom Zwischenkreis zum Energiespeicher) kann der Gleichspannungswandler als Abwärtswandler (auch Tiefsetzsteller genannt) fungieren. Mithilfe des Gleichspannungswandlers kann im Zwischenkreis der Umrichtereinheit ein für einen kontinuierlichen Betrieb des Umrichters erforderliches Spannungsniveau sichergestellt werden.

Die unterbrechungsfreie Stromversorgung ist vorteilhafterweise dazu ausgelegt, für eine vorgegebene Dauer von beispielsweise mindestens 5 Sekunden, insbesondere mindestens 10 Sekunden, die volle Bordnetzlast bereitzustellen.

Es kann vorgesehen sein, dass gemäß einem vorgegebenen zeitlichen Abschaltprofil immer mehr Verbraucher des Bordnetzes abgeschaltet oder mit reduzierter Leistung weiterbetrieben werden. In diesem Fall ist die unterbrechungsfreie Stromversorgung vorzugweise dazu ausgelegt, für eine vorgegebene Dauer von beispielsweise einer Minute eine gemäß einem solchen Abschaltprofil benötigte Leistung für das Bordnetz bereitzustellen. Das Abschalten bzw. das Herunterfahren der Verbraucher des Bordnetzes kann beispielsweise durch ein Zentralsteuergerät (ZSG) gesteuert werden.

Weiter ist es bevorzugt, wenn die unterbrechungsfreie Stromversorgung dazu ausgelegt, für eine vorgegebene Dauer von beispielsweise einer Stunde den Leistungsbedarf eines Notlüftungssystems und/oder eines Notbeleuchtungssystems bereitzustellen. Vorzugsweise sind der Energiespeicher und der Gleichspannungswandler der unterbrechungsfreien Stromversorgung derart ausgebildet, dass die unterbrechungsfreie Stromversorgung diese Anforderungen erfüllen kann.

Ferner kann die Energieversorgungseinrichtung ein weiteres Bordnetz aufweisen. Dieses weitere Bordnetz ist vorzugsweise als Gleichspannungsbordnetz, beispielsweise als 110V-Bordnetz, ausgebildet. Der Energiespeicher ist vorzugsweise derart mit dem weiteren Bordnetz verbunden, dass das weitere Bordnetz von dem Energiespeicher unter Umgehung der Umrichtereinheit mit elektrischer Energie versorgbar ist. Somit kann der Energiespeicher als Energiequelle für das weitere Bordnetz dienen. Die Formulierung, dass das weitere Bordnetz "unter Umgehung der Umrichtereinheit" vom Energiespeicher mit elektrischer Energie versorgbar ist, ist dahingehend zu verstehenden, dass elektrische Energie, die im Energiespeicher gespeichert ist, vom Energiespeicher zu dem weiteren Bordnetz fließen kann - ohne dabei über die Umrichtereinheit zu fließen.

Bei einer vorteilhaften Ausführungsvariante der Erfindung umfasst die Energieversorgungseinrichtung eine Energieeinkopplungsvorrichtung zum Einkoppeln elektrischer Energie aus einer Gleichspannungsfahrleitung in den Zwischenkreis der Umrichtereinheit. Die Gleichspannungsfahrleitung kann zum Beispiel eine Stromschiene oder eine Oberleitung sein.

Bei dieser Ausführungsvariante kann die Umrichtereinheit eine zwischen die Energieeinkopplungsvorrichtung und den Zwischenkreis geschaltete Rückspeisesperre zum Verhindern einer Einspeisung elektrischer Energie aus dem Zwischenkreis in die Energieeinkopplungsvorrichtung aufweisen. Die Rückspeisesperre kann beispielsweise eine Gleichrichterdiode sein oder mindestens eine Gleichrichterdiode umfassen. Weiter ist es bevorzugt, wenn die Energieversorgungseinrichtung bei dieser Ausführungsvariante einen Netzfilter, zum Beispiel eine Netzdrossel, umfasst.

Bei einer anderen vorteilhaften Ausführungsvariante der Erfindung umfasst die Energieversorgungseinrichtung eine Energieeinkopplungsvorrichtung zum Einkoppeln elektrischer Energie aus einer Wechselspannungsfahrleitung in den Zwischenkreis der Umrichtereinheit. Die Wechselspannungsfahrleitung kann beispielsweise eine Oberleitung sein. Ferner kann die Energieversorgungseinrichtung bei dieser Ausführungsvariante einen zwischen die Energieeinkopplungsvorrichtung und den Zwischenkreis geschalteten Gleichrichter aufweisen.

Besagter Gleichrichter kann zum Beispiel eine Diodenbrücke oder ein Vierquadrantensteller sein. Zudem kann es sich bei dem Gleichrichter um ein Element der Umrichtereinheit handeln.

In der Ausführungsvariante, bei der die Energieeinkopplungsvorrichtung dazu eingerichtet ist, elektrische Energie aus einer Wechselspannungsfahrleitung in den Zwischenkreis einzukoppeln, umfasst die Energieeinkopplungsvorrichtung vorteilhafterweise einen (Haupt-)Transformator zum Transformieren einer von der Wechselspannungsfahrleitung bereitgestellten Wechselspannung auf ein anderes Spannungsniveau, insbesondere auf niedrigeres Spannungsniveau.

Weiterhin kann die Energieversorgungseinrichtung ein Steuergerät zum Steuern der unterbrechungsfreien Stromversorgung, insbesondere zum Steuern des Gleichspannungswandlers der unterbrechungsfreien Stromversorgung, aufweisen. Das Steuergerät ist vorzugsweise dazu eingerichtet, die unterbrechungsfreie Stromversorgung so zu steuern, dass bei Ausfall einer Energieversorgung des Zwischenkreises über eine Fahrleitung von der unterbrechungsfreie Stromversorgung elektrische Energie, welche im Energiespeicher der unterbrechungsfreien Stromversorgung gespeichert ist, in den Zwischenkreis der Umrichtereinheit eingekoppelt wird. Im Sinne der vorliegenden Erfindung kann der Begriff "Steuern" auch ein Regeln (also Steuern mit Messwertrückkopplung) einschließen.

Wie eingangs erwähnt, betrifft die Erfindung ein Schienenfahrzeug. Das erfindungsgemäße Schienenfahrzeug ist mit der erfindungsgemäßen Energieversorgungseinrichtung ausgestattet.

Das Schienenfahrzeug umfasst vorzugsweise mindestens einen elektrischen Traktionsmotor. Ferner kann das Schienenfahrzeug eine Traktionsstromrichtereinheit zum Versorgen des Traktionsmotors mit elektrischer Energie aufweisen. Vorteilhafterweise umfasst die Traktionsstromrichtereinheit einen Traktionszwischenkreis. Bei dem Traktionszwischenkreis handelt es sich vorzugsweise um einen Gleichspannungszwischenkreis.

Ferner umfasst die Traktionsstromrichtereinheit vorteilhafterweise einen Wechselrichter, der zwischen den Traktionsmotor und Traktionszwischenkreis der Traktionsstromrichtereinheit geschaltet ist. Dieser Wechselrichter kann insbesondere als Pulswechselrichter ausgeführt sein.

Der Traktionszwischenkreis kann mit der Umrichtereinheit der Energieversorgungseinrichtung verbunden sein. In diesem Fall kann die Umrichtereinheit über den Traktionszwischenkreis mit elektrischer Energie versorgbar sein. Der Traktionszwischenkreis kann in bestimmten Betriebssituationen zur Spannungsstützung der Umrichtereinheit, genauer gesagt zu Spannungsstützung des Zwischenkreises der Umrichtereinheit, genutzt werden.

Des Weiteren kann die Umrichtereinheit einen Gleichspannungswandler aufweisen, welcher zwischen den Zwischenkreis der Umrichtereinheit und den Traktionszwischenkreis geschaltet ist. Dieser Gleichspannungswandler kann insbesondere als unidirektionaler Gleichspannungswandler ausgeführt sein. Vorzugsweise ist dieser Gleichspannungswandler dazu eingerichtet, eine vom Traktionszwischenkreis bereitgestellte Spannung (Traktionszwischenkreis-Spannung) auf eine niedrigere Spannung zu transformieren.

In einer anderen Ausführungsform kann vorgesehen sein, dass keine Ankopplung der Umrichtereinheit an einen Traktionszwischenkreis des Schienenfahrzeugs besteht. Auf solch eine Ankopplung kann insbesondere deshalb verzichtet werden, da im Falle einer Unterbrechung der Energieversorgung über eine Fahrleitung der Zwischenkreis der Umrichtereinheit durch die unterbrechungsfreie Stromversorgung mit elektrischer Energie versorgt werden kann. Dies ermöglicht, in denjenigen Phasen, in denen die Traktionsausrüstung des Schienenfahrzeugs nicht zum Antreiben bzw. Abbremsen des Schienenfahrzeugs benötigt wird (zum Beispiel während eines Abstellbetriebs des Schienenfahrzeugs), die Traktionsausrüstung abzuschalten. Dadurch kann der Energieverbrauch der Traktionsausrüstung reduziert werden.

Der Verzicht auf eine Ankopplung der Umrichtereinheit an einen Traktionszwischenkreis des Schienenfahrzeugs ermöglicht zudem, den Konstruktionsaufwand des Schienenfahrzeugs sowie die Komplexität seiner Steuerung zu reduzieren, Aufrüstvorgänge der Traktionsausrüstung zu vereinfachen und einzelne Komponenten der Energieversorgungseinrichtung, wie zum Beispiel den zuvor erwähnten Gleichrichter, kleiner zu dimensionieren.

Beim erfindungsgemäßen Verfahren zum Betreiben der Energieversorgungseinrichtung wird der Umrichter der Umrichtereinheit von dem Zwischenkreis der Umrichtereinheit mit elektrischer Energie versorgt und vom Umrichter elektrische Energie in das Bordnetz der Energieversorgungseinrichtung eingespeist. Ferner ist beim erfindungsgemäßen Verfahren vorgesehen, dass von der unterbrechungsfreien Stromversorgung der Energieversorgungseinrichtung elektrische Energie in den Zwischenkreis der Umrichtereinheit eingespeist wird, wenn eine Energieversorgung des Zwischenkreises über eine Fahrleitung unterbrochen ist.

Gemäß einer Weiterbildung des erfindungsgemäßen Verfahrens ist die unterbrechungsfreie Stromversorgung mit einem weiteren als ein Gleichspannungsbordnetz ausgebildeten Bordnetz verbunden, wobei das weitere Bordnetz von einem Energiespeicher der unterbrechungsfreien Stromversorgung unter Umgehung der Umrichtereinheit mit elektrischer Energie versorgt wird.

Bei einer weiteren vorteilhaften Weiterbildung des erfindungsgemäßen Verfahrens wird ein Energiespeicher der unterbrechungsfreien Stromversorgung, insbesondere der zuvor erwähnte Energiespeicher, über den Zwischenkreis der Umrichtereinheit mit elektrischer Energie aufgeladen, wenn elektrische Energie aus einer Fahrleitung oder aus einem Traktionszwischenkreis in den Zwischenkreis der Umrichtereinheit eingespeist wird.

Die bisher gegebene Beschreibung vorteilhafter Ausgestaltungen der Erfindung enthält zahlreiche Merkmale, die in den einzelnen abhängigen Patentansprüchen teilweise zu mehreren zusammengefasst wiedergegeben sind. Diese Merkmale können jedoch auch einzeln betrachtet und zu sinnvollen weiteren Kombinationen zusammengefasst werden. Insbesondere sind diese Merkmale jeweils einzeln und in beliebiger geeigneter Kombination mit der erfindungsgemäßen Energieversorgungseinrichtung, dem erfindungsgemäßen Schienenfahrzeug und dem erfindungsgemäßen Verfahren kombinierbar. Ferner können Verfahrensmerkmale auch als Eigenschaft der entsprechenden Vorrichtungseinheit gesehen werden.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit den Figuren näher erläutert werden. Die Ausführungsbeispiele dienen der Erläuterung der Erfindung und beschränken die Erfindung nicht auf die darin angegebenen Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

Werden in verschiedenen Figuren die gleichen Bezugszeichen verwendet, so bezeichnen diese im Wesentlichen gleiche oder einander entsprechende Elemente.

### Es zeigen:

- FIG 1: ein Schienenfahrzeug, das über eine Wechselspannungsoberleitung mit elektrischer Energie versorgbar ist;
- FIG 2: ein weiteres Schienenfahrzeug, das über eine Wechselspannungsoberleitung mit elektrischer Energie versorgbar ist;
- FIG 3: ein Schienenfahrzeug, das über eine Gleichspannungsoberleitung mit elektrischer Energie versorgbar ist.

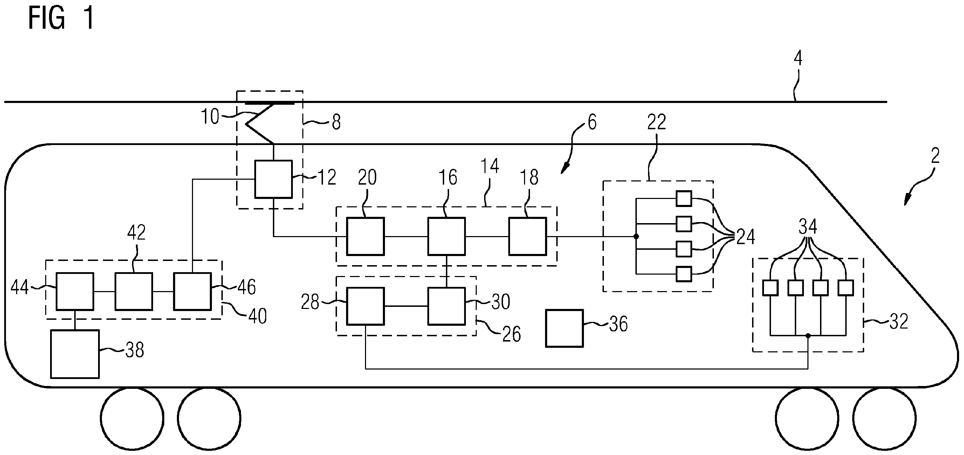

FIG 1 zeigt ein Schienenfahrzeug 2 in einer schematischen Darstellung. Ferner zeigt FIG 1 eine Fahrleitung 4, welche im vorliegenden Ausführungsbeispiel als Wechselspannungsoberleitung ausgebildet ist.

Das Schienenfahrzeug 2 ist mit einer Energieversorgungseinrichtung 6 ausgestattet. Die Energieversorgungseinrichtung 6 umfasst eine Energieeinkopplungsvorrichtung 8 mit einem Stromabnehmer 10 und einem Haupttransformator 12, der an den Stromabnehmer 10 angeschlossen ist.

Ferner umfasst die Energieversorgungseinrichtung 6 eine Umrichtereinheit 14 mit einem Zwischenkreis 16 und einem als Pulswechselrichter ausgebildeten Umrichter 18. Bei dem Zwischenkreis 16 handelt es sich um einen Gleichspannungszwischenkreis. Des Weiteren weist die Umrichtereinheit 14 einen Gleichrichter 20 auf, der zwischen den Haupttransformator 12 und den Zwischenkreis 16 geschaltet ist. Während der Gleichrichter 20 eine an seinem Eingang bereitgestellte Wechselspannung in eine Gleichspannung umwandelt, wandelt der Umrichter 18 eine an seinem Eingang bereitgestellte Gleichspannung in eine DreiphasenWechselspannung um.

Darüber hinaus weist die Energieversorgungseinrichtung 6 ein mit der Umrichtereinheit 14 verbundenes erstes elektrisches Bordnetz 22 auf, welches mehrere Hilfsbetriebe 24 umfasst, wie zum Beispiel Heizwiderstände und/oder Elektromotoren zum Antreiben von Pumpen, Kompressoren und/oder Lüftern. Bei diesem Bordnetz 22 handelt es sich um ein Dreiphasen-Wechselspannungsbordnetz.

Der besagte Umrichter 18 ist ausgangsseitig an dieses Bordnetz 22 angeschlossen, sodass das Bordnetz 22 über den Umrichter 18 mit elektrischer Energie versorgbar ist. Eingangsseitig ist der Umrichter 18 an den Zwischenkreis 16 der Umrichtereinheit 14 angeschlossen.

Weiter verfügt die Energieversorgungseinrichtung 6 über eine unterbrechungsfreie Stromversorgung 26. Letztere umfasst einen wiederaufladbaren Energiespeicher 28 zum Speichern elektrischer Energie sowie einen Gleichspannungswandler 30, der zwischen den Zwischenkreis 16 der Umrichtereinheit 14 und den Energiespeicher 28 geschaltet ist.

Im vorliegenden Ausführungsbeispiel ist der Gleichspannungswandler 30 als bidirektionaler Gleichspannungswandler ausgebildet. Folglich ermöglicht der Gleichspannungswandler 30 einen Energiefluss vom Energiespeicher 28 zum Zwischenkreis 16 der Umrichtereinheit 14 (zum Zwecke einer Spannungsstützung des Zwischenkreises 16) sowie umgekehrt einen Energiefluss vom Zwischenkreis 16 der Umrichtereinheit 14 zum Energiespeicher 28 (zum Zwecke einer Aufladung des Energiespeichers 28). Im Falle eines Energieflusses vom Energiespeicher 28 zum Zwischenkreis 16 dient der Gleichspannungswandler 30 als Hochsetzsteller, während der Gleichspannungswandler 30 im Falle eines Energieflusses vom Zwischenkreis 16 zum Energiespeicher 28 als Tiefsetzsteller dient.

Außerdem umfasst die Energieversorgungseinrichtung 6 ein zweites elektrisches Bordnetz 32, welches mehrere elektrische Verbraucher 34 umfasst. Bei diesem Bordnetz 32 handelt es sich um ein Gleichspannungsbordnetz mit einer Nennspannung von beispielsweise 110 V. Der Energiespeicher 28 der unterbrechungsfreien Stromversorgung 26 ist derart mit dem zweiten Bordnetz 32 verbunden, dass das zweite Bordnetz 32 vom Energiespeicher 28 unter Umgehung der Umrichtereinheit 14 mit elektrischer Energie versorgbar ist. Im vorliegenden Ausführungsbeispiel dient der Energiespeicher 28 der unterbrechungsfreien Stromversorgung 26 unter anderem als Energiequelle (Bordnetzbatterie) für das zweite Bordnetz 32. Alternativ oder zusätzlich kann für das zweite Bordnetz 32 eine eigenständige Energiequelle (Bordnetzbatterie) vorgesehen sein, welche nicht Teil der unterbrechungsfreien Stromversorgung 26 ist.

Ferner ist das Schienenfahrzeug 2 mit einem Steuergerät 36 ausgestattet, welches insbesondere zum Steuern der unterbrechungsfreien Stromversorgung 26 dient.

Das Schienenfahrzeug 2 weist außerdem einen Traktionsmotor 38 sowie eine Traktionsstromrichtereinheit 40 zum Versorgen des Traktionsmotors 38 mit elektrischer Energie auf. Die Traktionsstromrichtereinheit 40 umfasst einen als Gleichspannungszwischenkreis ausgebildeten Traktionszwischenkreis 42 sowie einen als Pulswechselrichter ausgebildeten Umrichter 44, der zwischen den Traktionsmotor 38 und den Traktionszwischenkreis 42 geschaltet ist.

Grundsätzlich kann das Schienenfahrzeug 2 mehrere Traktionsmotoren umfassen. Auch kann das Schienenfahrzeug 2 mehrere Traktionsstromrichtereinheiten aufweisen. Insbesondere kann für jeden Traktionsmotor des Schienenfahrzeugs 2 eine eigene Traktionsstromrichtereinheit vorgesehen sein. Der Einfachheit halber ist in FIG 1 nur ein Traktionsmotor 38 und nur eine Traktionsstromrichtereinheit 40 dargestellt. Entsprechend nimmt die Beschreibung nur auf diesen Traktionsmotor 38 und diese Traktionsstromrichtereinheit 40 Bezug.

Weiter umfasst die Traktionsstromrichtereinheit 40 einen Gleichrichter 46, durch welchen der Traktionszwischenkreis 42 mit dem Haupttransformator 12 verbunden ist. Letztgenannter Gleichrichter 46 kann beispielsweise als Vierquadrantensteller ausgebildet sein.

Im vorliegenden Ausführungsbeispiel umfasst der Haupttransformator 12 mehrere Sekundärwicklungen, wobei die Umrichtereinheit 14 und die Traktionsstromrichtereinheit 40 jeweils mit einer eigenen Sekundärwicklung des Haupttransformators 12 verbunden sind.

Die zuvor genannte Energieeinkopplungsvorrichtung 8 kann außer dem Stromabnehmer 10 und dem Haupttransformator 12 eine oder mehrere Schaltvorrichtungen für Schutzfunktionen aufweisen. Ferner kann die Energieeinkopplungsvorrichtung 8 eine oder mehrere Schaltvorrichtungen zum Vorladen des Zwischenkreises 16 der Umrichtereinheit 14 sowie eine oder mehrere Schaltvorrichtungen zum Vorladen des Traktionszwischenkreises 42 der Traktionsstromrichtereinheit 40 aufweisen. Besagte Schaltvorrichtungen sind einer besseren Übersichtlichkeit halber figürlich nicht dargestellt.

Im Normalbetrieb des Schienenfahrzeugs 2 wird der Zwischenkreis 16 der Umrichtereinheit 14 mithilfe der Energieeinkopplungsvorrichtung 8 über die Fahrleitung 4 mit elektrischer Energie versorgt. Der Zwischenkreis 16 der Umrichtereinheit 14 wiederum versorgt den Umrichter 18 mit elektrischer Energie, wobei der Umrichter 18 seinerseits elektrische Energie in das erste Bordnetz 22 einspeist. Im Normalbetrieb wird der Energiespeicher 28 der unterbrechungsfreien Stromversorgung 26 - sofern er nicht bereits vollständig geladen ist - mit elektrischer Energie aus dem Zwischenkreis 16 der Umrichtereinheit 14 geladen.

Zudem wird im Normalbetrieb die Traktionsstromrichtereinheit 40 mithilfe der Energieeinkopplungsvorrichtung 8 über die Fahrleitung 4 mit elektrischer Energie versorgt. Die Traktionsstromrichtereinheit 40 versorgt ihrerseits den Traktionsmotor 38 mit elektrischer Energie.

Das zuvor erwähnte Steuergerät 36 steuert die unterbrechungsfreie Stromversorgung 26 derart, dass der Zwischenkreis 16 der Umrichtereinheit 14 von der unterbrechungsfreien Stromversorgung 26 mit elektrischer Energie versorgt wird, falls eine Energieversorgung des Zwischenkreises 16 über die Fahrleitung 4 temporär unterbrochen ist. Insbesondere steuert das Steuergerät 36 den Gleichspannungswandler 30 der unterbrechungsfreien Stromversorgung 26 im Falle einer solchen temporären Unterbrechung der Energieversorgung des Zwischenkreises 16 über die Fahrleitung 4 derart, dass die Zwischenkreisspannung des Zwischenkreises 16 eine vorgegebene Mindestspannung nicht unterschreitet.

Die Beschreibungen der nachfolgenden Ausführungsbeispiele beschränken sich jeweils primär auf die Unterschiede zum vorhergehenden Ausführungsbeispiel, auf das bezüglich gleichbleibender Merkmale und Funktionen verwiesen wird. Nicht erwähnte Merkmale sind in den nachfolgenden Ausführungsbeispielen übernommen, ohne dass sie erneut beschrieben werden.

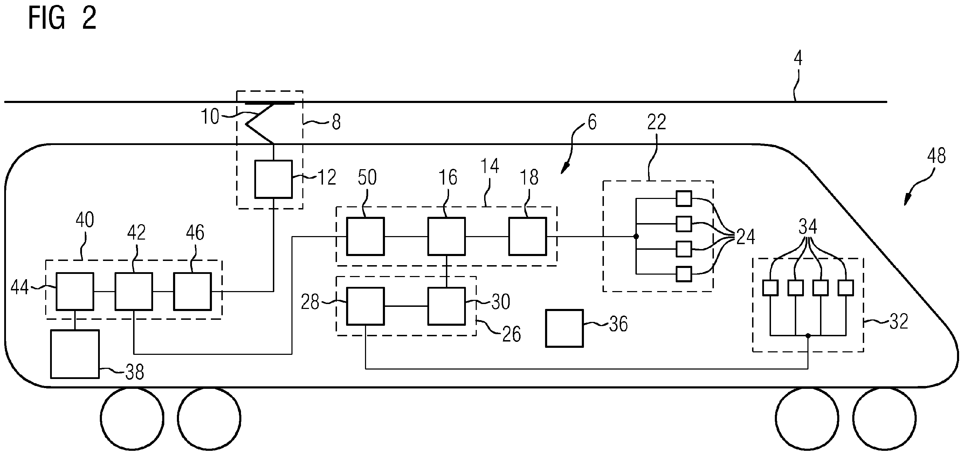

FIG 2 zeigt in einer schematischen Darstellung ein weiteres Schienenfahrzeug 48 sowie eine als Wechselspannungsoberleitung ausgebildete Fahrleitung 4.

Bei diesem Schienenfahrzeug 48 weist die Umrichtereinheit 14 (anstelle eines Gleichrichters) einen Gleichspannungswandler 50 auf, durch welchen der Zwischenkreis 16 der Umrichtereinheit 14 an den Traktionszwischenkreis 42 gekoppelt ist. Dieser Gleichspannungswandler 50 ist ein unidirektionaler Gleichspannungswandler, wobei der Gleichspannungswandler 50 eingangsseitig an den Traktionszwischenkreis 42 angeschlossen ist und ausgangsseitig an den Zwischenkreis 16 der Umrichtereinheit 14 angeschlossen ist. Ferner dient dieser Gleichspannungswandler 50 als Tiefsetzsteller.

Im vorliegenden Ausführungsbeispiel ist die Umrichtereinheit 14 nicht direkt mit dem Haupttransformator 12 verbunden. Vielmehr ist die Umrichtereinheit 14 über den Traktionszwischenkreis 42 mit dem Haupttransformator 12 verbunden.

Bei dem Schienenfahrzeug 48 aus FIG 2 wird im Normalbetrieb der Zwischenkreis 16 der Umrichtereinheit 14 über den Traktionszwischenkreis 42 mit elektrischer Energie versorgt, wobei der Traktionszwischenkreis 42 mithilfe der Energieeinkopplungsvorrichtung 8 elektrische Energie aus der Fahrleitung 4 bezieht. Ist eine Energieversorgung des Traktionszwischenkreises 42 über die Fahrleitung 4 temporär unterbrochen, so wird der Zwischenkreis 16 der Umrichtereinheit 14 über die unterbrechungsfreie Stromversorgung 26 mit elektrischer Energie versorgt. Alternativ oder zusätzlich kann der Zwischenkreis 16 der Umrichtereinheit 14, falls die Energieversorgung des Zwischenkreises 16 über die Fahrleitung 4 temporär unterbrochen ist, vom Traktionsmotor 38 über den Traktionszwischenkreis 42 mit elektrischer Energie versorgt werden, vorausgesetzt das Schienenfahrzeug 48 befindet sich im Fahr- oder Bremsbetrieb und hat eine hinreichend große Fahrgeschwindigkeit.

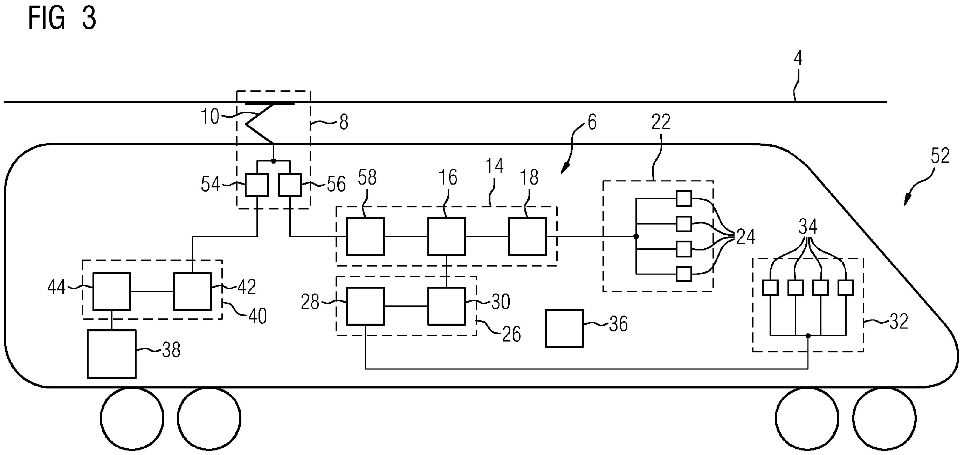

FIG 3 zeigt in einer schematischen Darstellung ein anderes Schienenfahrzeug 52 sowie eine als Gleichspannungsoberleitung ausgebildete Fahrleitung 4.

Im vorliegenden Ausführungsbeispiel umfasst die Energieeinkopplungsvorrichtung 8 (anstelle eines Haupttransformators) einen ersten Netzfilter 54, über welchen der Traktionszwischenkreis 42 mit dem Stromabnehmer 10 verbunden ist, sowie einen zweiten Netzfilter 56, über welchen der Zwischenkreis 16 der Umrichtereinheit 14 mit dem Stromabnehmer 10 verbunden ist.

Darüber hinaus umfasst die Umrichtereinheit 14 (anstelle eines Gleichrichters) eine als Gleichrichterdiode ausgebildete Rückspeisesperre 58 zum Verhindern einer Einspeisung elektrischer Energie aus dem Zwischenkreis 16 in die Energieeinkopplungsvorrichtung 8. Zudem weist im vorliegenden Ausführungsbeispiel die Traktionsstromrichtereinheit 40 keinen Gleichrichter auf.

Im Normalbetrieb des Schienenfahrzeugs 52 wird der Zwischenkreis 16 der Umrichtereinheit 14 mithilfe der Energieeinkopplungsvorrichtung 8 über die Fahrleitung 4 mit elektrischer Energie versorgt. Ist eine Energieversorgung des Zwischenkreises 16 über die Fahrleitung 4 temporär unterbrochen, so wird der Zwischenkreis 16 der Umrichtereinheit 14 über die unterbrechungsfreie Stromversorgung 26 mit elektrischer Energie versorgt.

Grundsätzlich ist bei dem Schienenfahrzeug 52 aus FIG 3 wie beim Ausführungsbeispiel aus FIG 2 eine Ankopplung des Traktionszwischenkreises 42 an den Zwischenkreis 16 der Umrichtereinheit 14 möglich, beispielsweise über einen Gleichspannungswandler.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können hieraus abgeleitet werden, ohne den Schutzumfang der Erfindung zu verlassen.

## Patentansprüche

1. Schienenfahrzeug (48), aufweisend
- eine Energieversorgungseinrichtung (6) aufweisend ein elektrisches Bordnetz (22), welches ein oder mehrere Hilfsbetriebe (24) umfasst, eine mit dem Bordnetz (22) verbundene Hilfsbetriebeumrichtereinheit (14), welche einen Umrichter (18) zum Einspeisen elektrischer Energie in das Bordnetz (22) sowie einen mit dem Umrichter (18) verbundenen Zwischenkreis (16) zum Versorgen des Umrichters (18) mit elektrischer Energie umfasst, sowie eine mit dem Zwischenkreis (16) verbundene unterbrechungsfreie Stromversorgung (26) zum Einspeisen elektrischer Energie in den Zwischenkreis (16) der Hilfsbetriebeumrichtereinheit (14), wobei die unterbrechungsfreie Stromversorgung (26) einen Energiespeicher (28) zum Speichern elektrischer Energie sowie einen mit dem Energiespeicher (28) verbundenen Gleichspannungswandler (30) umfasst, wobei der Gleichspannungswandler (30) zwischen den Energiespeicher (28) und den Zwischenkreis (16) geschaltet ist, und wobei der Energiespeicher (28) ein wiederaufladbarer Energiespeicher (28) ist und der Gleichspannungswandler (30) als bidirektionaler Gleichspannungswandler ausgebildet ist, sodass der Energiespeicher (28) über den Gleichspannungswandler (30) mit elektrischer Energie aus dem Zwischenkreis (16) der Umrichtereinheit (14) aufladbar ist, und
- einen elektrischen Traktionsmotor (38) sowie eine Traktionsstromrichtereinheit (40) zum Versorgen des Traktionsmotors (38) mit elektrischer Energie, wobei die Traktionsstromrichtereinheit (40) einen Traktionszwischenkreis (42) umfasst, der mit der Hilfsbetriebeumrichtereinheit (14) der Energieversorgungseinrichtung (6) verbunden ist und über welchen die Hilfsbetriebeumrichtereinheit (14) mit elektrischer Energie versorgbar ist.

2. Schienenfahrzeug (48) nach Anspruch 1,
**dadurch gekennzeichnet, dass** der Umrichter (18) der Hilfsbetriebeumrichtereinheit (14) als Wechselrichter, insbesondere als Pulswechselrichter, ausgebildet ist und der Zwischenkreis (16) ein Gleichspannungszwischenkreis ist.

3. Schienenfahrzeug (48) nach Anspruch 1 oder 2,
**dadurch gekennzeichnet, dass** der Gleichspannungswandler (30) der Energieversorgungseinrichtung (6) dazu eingerichtet ist, eine vom Energiespeicher (28) bereitgestellte Spannung auf eine höhere Spannung zu transformieren.

4. Schienenfahrzeug nach Anspruch 1 oder 3, **dadurch gekennzeichnet, dass** ein weiteres Bordnetz (32), welches als Gleichspannungsbordnetz ausgebildet ist, wobei der Energiespeicher (28) derart mit dem weiteren Bordnetz (32) verbunden ist, dass das weitere Bordnetz (32) von dem Energiespeicher (28) unmittelbar mit elektrischer Energie versorgbar ist.

5. Schienenfahrzeug nach einem der Ansprüche 1 bis 4, **dadurch gekennzeichnet, dass** die Hilfsbetriebeumrichtereinheit (14) einen unidirektionalen Gleichspannungswandler (50) aufweist, durch welchen der Zwischenkreis der Hilfsbetriebeumrichtereinheit (14) an den Traktionszwischenkreis (42) gekoppelt ist.

6. Verfahren zum Betreiben eines Schienenfahrzeugs (48) nach einem der Ansprüche 1 bis 5, bei dem der Umrichter (18) der Hilfsbetriebeumrichtereinheit (14) vom Zwischenkreis (16) der Hilfsbetriebeumrichtereinheit (14) mit elektrischer Energie versorgt wird und vom Umrichter (18) elektrische Energie in das Bordnetz (22) der Energieversorgungseinrichtung (6) eingespeist wird, und
von der unterbrechungsfreien Stromversorgung (26) der Energieversorgungseinrichtung (6) elektrische Energie in den Zwischenkreis (16) der Hilfsbetriebeumrichtereinheit (14) eingespeist wird, um das Bordnetz (22) mit elektrischer Energie zu versorgen (S. 4, Z. 33, bis S. 5, Z. 2; zu A4), wenn eine Energieversorgung des Zwischenkreises (16) über den Traktionszwischenkreis (42) unterbrochen ist.

7. Verfahren nach Anspruch 6, bei dem die unterbrechungsfreie Stromversorgung (26) mit einem weiteren Bordnetz (32) verbunden ist, welches als Gleichspannungsbordnetz ausgebildet ist, wobei das weitere Bordnetz (32) von einem Energiespeicher (28) der unterbrechungsfreien Stromversorgung (26) unmittelbar mit elektrischer Energie versorgt wird.

8. Verfahren nach Anspruch 6 oder 7, bei dem der Energiespeicher (28) der unterbrechungsfreien Stromversorgung (26) über den Zwischenkreis (16) der Hilfsbetriebeumrichtereinheit (14) mit elektrischer Energie aufgeladen wird, wenn elektrische Energie aus dem Traktionszwischenkreis (42) in den Zwischenkreis (16) der Hilfsbetriebeumrichtereinheit (14) eingespeist wird.

## Claims

1. Rail vehicle (48) having
- a power supply facility (6) having an electrical on-board power supply (22) which comprises one or more auxiliaries (24), an auxiliary converter unit (14) connected to the on-board power supply (22), which comprises a converter (18) for feeding electrical energy to the on-board power supply (22) and an intermediate circuit (16), connected to the converter (18), for supplying the converter (18) with electrical energy and an uninterruptible power supply (26) connected to the intermediate circuit (16) for feeding electrical energy to the intermediate circuit (16) of the auxiliary converter unit (14), wherein the uninterruptible power supply (26) comprises an energy storage unit (28) for storing electrical energy and a DC-DC converter (30) connected to the energy storage unit (28), wherein the DC-DC converter (30) is connected between the energy storage unit (28) and the intermediate circuit (16), and wherein the energy storage unit (28) is a rechargeable energy storage unit (28) and the DC-DC converter (30) is embodied as a bidirectional DC-DC converter (30), such that the energy storage unit (28) is chargeable with electrical energy from the intermediate circuit (16) of the converter unit (14) by way of the DC-DC converter (30), and
- an electrical traction motor (38) and a traction converter unit (40) for supplying the traction motor (38) with electrical energy, wherein the traction converter unit (40) comprises a traction intermediate circuit (42), which is connected to the auxiliary converter unit (14) of the power supply facility (6) and via which the auxiliary converter unit (14) can be supplied with electrical energy.

2. Rail vehicle (48) according to claim 1,
**characterised in that** the converter (18) of the auxiliary converter unit (14) is embodied as an inverter, in particular as a pulse-width modulated inverter and the intermediate circuit (16) is a DC-DC intermediate circuit.

3. Rail vehicle (48) according to claim 1 or 2, **characterised in that** the DC-DC converter (30) of the power supply facility (6) is configured to transform a voltage provided by the energy storage unit (28) into a higher voltage.

4. Rail vehicle according to claim 1 or 3, **characterised in that** a further on-board power supply (32) which is embodied as a DC-DC on-board power supply, wherein the energy storage unit (28) is connected to the further on-board power supply (32) such that the further on-board power supply (32) can be directly supplied with electrical energy from the energy storage unit (28).

5. Rail vehicle according to one of claims 1 to 4, **characterised in that** the auxiliary converter unit (14) has a unidirectional DC-DC converter (50), via which the intermediate circuit of the auxiliary converter unit (14) is coupled to the traction intermediate circuit (42).

6. Method for operating a rail vehicle (48) according to one of claims 1 to 5, in which the converter (18) of the auxiliary converter unit (14) is supplied with electrical energy from the intermediate circuit (16) of the auxiliary converter unit (14) and electrical energy is fed to the on-board power supply (22) of the power supply facility (6) from the converter (18), and
electrical energy is fed to the intermediate circuit (16) of the auxiliary converter unit (14) by the uninterruptible power supply (26) of the power supply facility (6) in order to supply the on-board power supply (22) with electrical energy (p. 4, l. 33, to p. 5, l. 2; to A4) if a power supply of the intermediate circuit (16) is interrupted via the traction intermediate circuit (42) .

7. Method according to claim 6, in which the uninterruptible power supply (26) is connected to a further on-board power supply (32), which is embodied as a DC-DC on-board power supply, wherein the further on-board power supply (32) is directly supplied with electrical energy from an energy storage unit (28) of the uninterruptible power supply (26).

8. Method according to claim 6 or 7, in which the energy storage unit (28) of the uninterruptible power supply (26) is charged with electrical energy via the intermediate circuit (16) of the auxiliary converter unit (14) if electrical energy is fed from the traction intermediate circuit (42) into the intermediate circuit (16) of the auxiliary converter unit (14).

## Revendications

1. Véhicule (48) ferroviaire, comportant
- un dispositif (6) d'alimentation en énergie, comportant un réseau (22) électrique de bord, qui comprend un ou plusieurs auxiliaires (24), une unité (14) de convertisseur d'auxiliaire, qui est reliée au réseau (22) de bord et qui comprend un convertisseur (18) d'alimentation du réseau (22) de bord en énergie électrique, ainsi qu'un circuit (16) intermédiaire relié au convertisseur (18) pour l'alimentation du convertisseur (18) en énergie électrique, ainsi qu'une alimentation (26) en courant sans interruption reliée au circuit (16) intermédiaire pour l'alimentation en énergie électrique du circuit (16) intermédiaire de l'unité (14) de convertisseur d'auxiliaire, dans lequel l'alimentation (26) en courant sans interruption comprend un accumulateur (28) d'énergie pour accumuler de l'énergie électrique ainsi qu'un convertisseur (30) de courant continu relié à l'accumulateur (28) d'énergie, dans lequel le convertisseur (30) de courant continu est monté entre l'accumulateur (28) d'énergie et le circuit (16) intermédiaire, et dans lequel l'accumulateur (28) d'énergie est un accumulateur (28) d'énergie rechargeable et le convertisseur (30) de tension continue est constitué sous la forme d'un convertisseur de courant continu bidirectionnel, de manière à ce que l'accumulateur (28) d'énergie puisse, par le convertisseur (30) de courant continu, être rechargé en énergie électrique, à partir du circuit (16) intermédiaire de l'unité (14) de convertisseur, et
- un moteur (38) électrique de traction, ainsi qu'une unité (40) de convertisseur de traction pour l'alimentation du moteur (38) de traction en énergie électrique, dans lequel l'unité (40) de convertisseur de traction comprend un circuit (42) intermédiaire de traction, qui est relié à l'unité (14) de convertisseur d'auxiliaire du dispositif (6) d'alimentation en énergie et par lequel l'unité (14) de convertisseur d'auxiliaire peut être alimentée en énergie électrique.

2. Véhicule (48) ferroviaire suivant la revendication 1, **caractérisé en ce que** le convertisseur (18) de l'unité (14) de convertisseur d'auxiliaire est constituée sous la forme d'un onduleur, en particulier sous la forme d'un onduleur à impulsions, et le circuit (16) intermédiaire est un circuit intermédiaire en tension continue.

3. Véhicule (48) ferroviaire suivant la revendication 1 ou 2, **caractérisé en ce que** le convertisseur (30) de tension continue du dispositif (6) d'alimentation en énergie est agencé de manière à transformer une tension mise à disposition par l'accumulateur (28) d'énergie en une tension plus haute.

4. Véhicule ferroviaire suivant la revendication 1 ou 3, **caractérisé par** un autre réseau (32) de bord, qui est constitué en réseau de bord en tension continue, dans lequel l'accumulateur (28) d'énergie est relié à l'autre réseau (32) de bord, de manière à pouvoir alimenter l'autre réseau (32) de bord en énergie électrique directement par l'accumulateur (28) d'énergie.

5. Véhicule ferroviaire suivant l'une des revendications 1 à 4,
**caractérisé en ce que** l'unité (14) de convertisseur d'auxiliaire comporte un convertisseur (50) de tension continue unidirectionnel, par lequel le circuit intermédiaire de l'unité (14) de convertisseur d'auxiliaire est relié au circuit (42) intermédiaire de traction.

6. Procédé pour faire fonctionner un véhicule (48) ferroviaire suivant l'une des revendications 1 à 5, dans lequel on alimente en énergie électrique le convertisseur (18) de l'unité (14) de convertisseur d'auxiliaire, par le circuit (16) intermédiaire de l'unité (14) de convertisseur d'auxiliaire, et on alimente, par le convertisseur (18), en énergie électrique le réseau (22) de bord du dispositif (6) d'alimentation en énergie, et
on alimente en énergie électrique, par l'alimentation (26) en courant sans interruption du dispositif (6) d'alimentation en énergie, le circuit (16) intermédiaire de l'unité (14) de convertisseur d'auxiliaire, afin d'alimenter (page 4, ligne 33 à page 5, ligne 2 ; à A4) le réseau (22) de bord en énergie électrique, si une alimentation en énergie du circuit (16) intermédiaire, par le circuit (42) intermédiaire de traction, est interrompue.

7. Procédé suivant la revendication 6, dans lequel l'alimentation (26) en courant sans interruption est reliée à un autre réseau (32) de bord, qui est constitué en réseau de bord en tension continue, dans lequel on alimente en énergie électrique l'autre réseau (32) de bord directement par un accumulateur (28) d'énergie de l'alimentation (26) en courant sans interruption.

8. Procédé suivant la revendication 6 ou 7, dans lequel on charge en énergie électrique l'accumulateur (28) d'énergie de l'alimentation (26) en courant sans interruption, par le circuit (16) intermédiaire de l'unité (14) de convertisseur d'auxiliaire, lorsque l'on alimente en énergie électrique le circuit (16) intermédiaire de l'unité (14) de convertisseur d'auxiliaire, à partir du circuit (42) intermédiaire de traction.
